# EUROPEAN PATENT APPLICATION

(11) **EP 4 663 940 A1**
(43) Date of publication of application: **17.12.2025**
(21) Application number: 24181477.1
(22) Date of filing: 11.06.2024
(51) Int. Cl.: F03B 15/04, F03B 15/08, H02P 9/04, H02J 3/38

(54) **AN AUXILIARY DRIVING SYSTEM FOR A HYDROELECTRIC POWER GENERATION APPARATUS**

(71) Applicant: ABB Schweiz AG, 5400 Baden (CH)
(72) Inventor: Macia, Ramon, 03201 Elche (Alicante) (ES)
(74) Representative: De Bortoli, Eros

(57) **Abstract**

The hydroelectric power generation apparatus comprises:
- one or more hydro turbines having a rotary turbine shaft;
- one or more electric power generators, each having a rotor shaft mechanically coupled to and rotatably actuated by the turbine shaft of a corresponding hydro turbine, a rotor winding rotating together said rotor shaft and a stator winding operatively coupled to said rotor winding;
- a main control unit to control the operation of said hydroelectric power generation apparatus.

The auxiliary driving system comprises:
- one or more electric power converters, each electric power converter being in operation electrically connected to a corresponding electric power generator and to a corresponding electric power distribution line;
- an auxiliary control unit operatively coupled to each electric power converter, said auxiliary control unit being in operation capable of communicating with said main control unit.

The auxiliary control unit is configured to carry out a control procedure to adjust the rotational speed of the rotor shaft of each electric power generator depending on an available water flow directed towards a corresponding hydro turbine operatively coupled to said electric power generator and to a water chamber feeding said hydro turbine.

## Description

The present invention relates to the technical field of hydroelectric power generation plants, particularly small hydroelectric power generation plants of the fluent water type.

More particularly, the present invention relates to an auxiliary driving system for a hydroelectric power generation apparatus.

Small hydroelectric power generation plants (i.e., plants having a nominal power lower than 10000 kW) are quite widespread in countryside or mountain regions.

Typically, these power generation plants are of the fluent water type, in which the water for actuating the hydro turbines is withdrawn directly from a waterbed (such as a river or a channel) where water continuously flows.

A hydroelectric power generation plant normally comprises one or more hydroelectric power generation apparatuses, each including at least a hydro turbine operatively connected with a corresponding electric power generator electrically connected to the power distribution network.

Hydroelectric power generation plants of the fluent water type have some drawbacks. Generally, they are not provided with water flow regulations systems to ensure a constant flow of the water actuating the turbine. Their operation is thus very much influenced by seasonal variations of the available water flow rate.

Being synchronized with the typical operating frequency of the power distribution grid, the hydroelectric power generation apparatuses of these plants may be subject to relevant losses of efficiency, if the turbine speed is not included in a relatively narrow nominal range, or they must be disconnected from the power distribution network, if the turbine speed becomes too low. Of course, this implies remarkable reductions of the electric power production and energetic yield.

In the market, it is quite felt the need for innovative solutions to overcome or mitigate the above-mentioned criticalities.

The present invention intends to respond to this need by providing an auxiliary driving system for a hydroelectric power generation apparatus according to the following claim 1 and the related dependent claims.

Characteristics and advantages of the present invention will be more apparent with reference to the description given below and to the accompanying figures, provided purely for explanatory and non-limiting purposes, wherein:

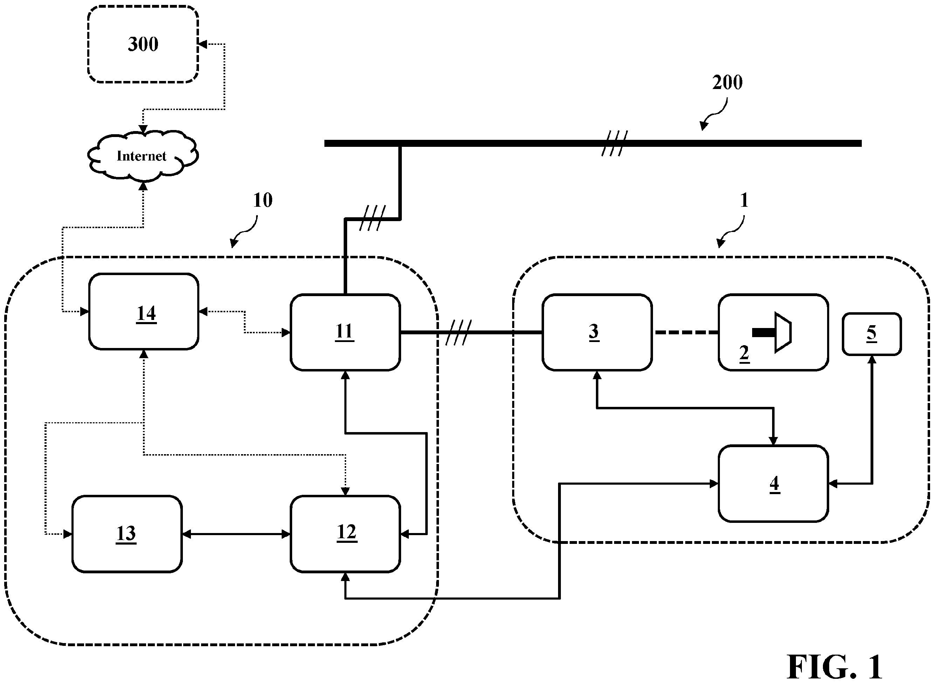

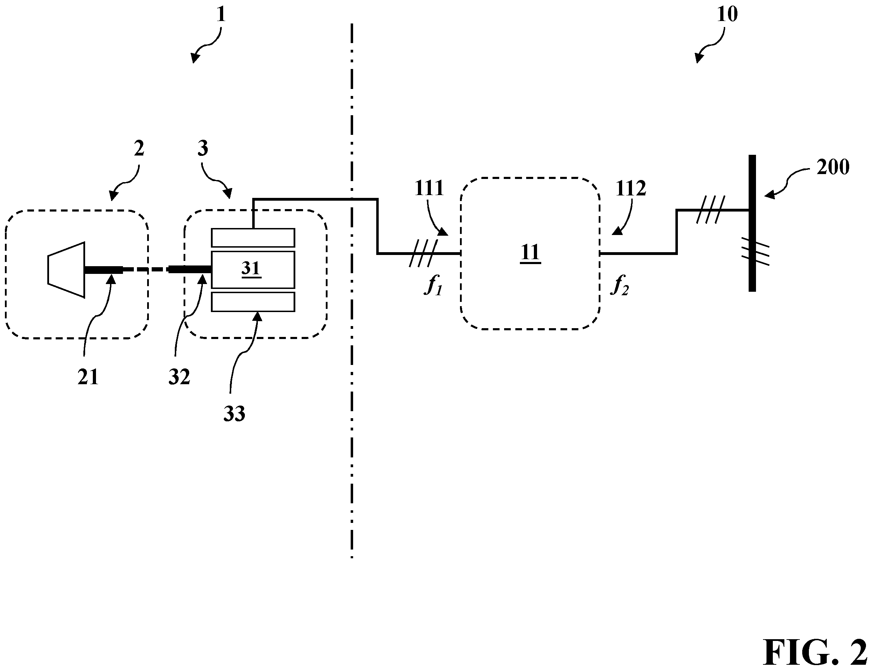

- Figures 1-2 illustrate block diagrams schematically showing a hydroelectric power generation apparatus operatively coupled to a driving system, according to the present invention;
- Figures 3-4 schematically show the operation of the driving system, according to the present invention.

With reference to above-mentioned figures, the present invention relates to an auxiliary driving system 10 for a hydroelectric power generation apparatus 1.

The hydroelectric power generation apparatus 1 may be installed ex-novo on the field or be a pre-existing apparatus.

Preferably, the hydroelectric power generation apparatus 1 is installed or suitable for installation in hydroelectric power generation plants, particularly in a hydroelectric power generation plant of the fluent water type having a small size (i.e., nominal power lower than 10000 KW).

The hydroelectric power generation apparatus 1 comprises one or more hydro turbines 2, for example of the Kaplan, Pelton, Ossberger, Fly or Francis type.

Each hydro turbine 2 is arranged in a suitable turbine chamber (not shown) having an inlet duct withdrawing water from a water chamber (not shown) in fluid dynamic communication with the outer environment (for example a waterbed in proximity of the electric power generation plant) and an outlet duct channeling water to the outer environment.

Each hydro turbine 2 is actuated by a corresponding water flow coming into the turbine chamber and subject to a jump having a desired height.

The hydro turbine 2 has a turbine shaft 21 rotated by the turbine movement, in a conventional manner. Typical values for the rotational speed of the turbine shaft 21 are within a range of 300-1000 rpm for a Kaplan turbine or 100-400 rpm for a Francis turbine.

Advantageously, the hydroelectric power generation apparatus 1 comprises one or more flow regulation devices 20 operatively coupled to each hydro turbine 2.

The flow regulation devices 20 are adapted to control the water flow directed towards the corresponding hydro turbine 2 to which they are operatively coupled. As an example, the water flow may be regulated in a range flow rate values spanning in an interval 0% to 120%. The flow regulation devices 20 can take different off conditions, each corresponding to a level of water flow directed towards the hydro turbine 2. Off conditions may generally span in a range from 0% off (no water flow) to 100% off (maximum water flow).

The rotational speed of a hydro turbine 2 is obviously determined by the off conditions of the flow regulation devices 20 coupled thereto. Normally, a hydro turbine 2 works at a normal speed when the corresponding flow regulation devices are 50% off.

Preferably, the flow regulation devices 20 can vary their operating conditions upon receiving suitable input control signals. For example, they may be formed by suitable electro-valves that can be controlled electrically.

The hydroelectric power generation apparatus 1 comprises one or more electric power generators 3, each operatively associated to a corresponding hydro turbine 2.

Each electric power generator 3 is actuated by the corresponding hydro turbine 2.

The electric power generator 3 has a rotor winding 31, for example of the squirrel cage type or wounded type. The rotor winding 31 is solidly connected to a rotor shaft 32 mechanically connected with the turbine shaft 21 of the corresponding hydro turbine 2 to be rotatably actuated by said turbine shaft.

The electric power generator 3 further has a stator winding 33 operatively coupled to the rotor winding 31 to form an electromagnetic induction machine capable of generating active electric power, when the rotor winding 31 moves with respect to the stator winding 33. Preferably, each electric power generator 3 is of the asynchronous type.

In general, the above-mentioned one or more hydro turbines 2, one or more flow regulation devices 20 and one or more electric power generators 3 can be arranged according to solutions of know type, which are here not described in more detail for the sake of brevity.

The hydroelectric power generation apparatus 1 comprises a main control unit 4. As mentioned above, also this equipment may be already installed on the field.

The main control unit 4 is configured to control the general operation of the hydroelectric power generation apparatus, particularly the electric power generator 3 and the flow regulation devices 20 operatively coupled to each hydro turbine 2.

The main control unit 4 is also configured to collect monitoring data related to the operating conditions of various components of the hydroelectric power generation apparatus. As an example, the main control unit 4 can be operatively coupled to suitable sensing devices (not shown) configured to provide monitoring data related to the operating conditions of each hydro turbine 2, for example water pressure, temperature, rotational speed, and so on. Obviously, the main control unit 4 can be configured to carry out additional functionalities of known type, which are here not described in detail for the sake of brevity.

In order to carry out its functionalities, the main control unit 4 can include suitable computerized data processing resources (e.g., including microprocessors, memories, and the like), which can be arranged according to the needs.

As the skilled person can easily understand, the hydroelectric power generation apparatus 1 can include several additional devices/components in addition to those described above. These additional devices/components may be arranged according to solutions of know type and are here not described in detail for the sake of brevity.

According to the invention, the auxiliary driving system 10 of the invention comprises one or more electric power converters 11, each operatively associated to an electric power generator 3 of the hydroelectric power generation apparatus 1.

In operation, each electric power converter 11 is electrically connected to a corresponding electric power generator 3 and to a corresponding electric power distribution line 200.

The electric power converter 11 has a first port 111 adapted to be electrically connected with the stator winding 33 and a second port 112 adapted to be electrically connected with the electric power distribution line 200, e.g., the bar bus of an electric power distribution network. Preferably, the electric power converter 11 is an AC/AC converter configured to perform a bidirectional transmission of electric power between the ports 111, 112.

The electric power converter 11 can thus transmit electric power from the electric power generator 3 towards the electric power distribution line 200, and vice-versa.

In particular, the electric power converter 11 is adapted to receive active electric power from an electric power generator 3 (at the port 111) and transmit active electric power (at the port 112) towards the electric power distribution line 200.

The active electric power received by the port 111 of the electric power converter 111 is generated by the electromagnetic induction machine formed by the rotor and stator windings 31, 33 of the electric power generator 3, when the rotor shaft 31 of this latter is actuated by the hydro turbine 2.

The electric power converter 11 is also adapted to receive reactive electric power from the electric power distribution line 200 (at the port 112) and compensate the reactive energy by means of the drive power circuit 11.

The reactive electric power transmitted by the port 111 of the electric power converter 11 is adsorbed by the corresponding electric power generator 3 to excite the rotor and stator windings 31, 33 thereof.

The above-mentioned ports 111, 112 of each electric power converter 11 receive/transmit electric power respectively at first and second operating frequency f₁ and f₂, respectively.

The first operating frequency f₁ can vary and it is the operating frequency of the electric power generated or adsorbed by the corresponding electric power generator 3, the value of which depends on the rotational speed of the rotor shaft 32 and on the number of poles of the electromagnetic induction machine. Typical values for the first operating frequency f₁ may be included in a range of 0-50 Hz or 0-60 Hz.

The second operating frequency f₂ is predefined and it is the typical operating frequency of the power distribution grid 5, namely the mains frequency (50 or 60 Hz).

The second operating frequency f₂ is thus higher or equal than the first operating frequency f₁. Preferably, each electric power converter 11 is an AC/AC converter of the active front end type, for example equipped with a flying start control arrangement.

In general, the one or more electric power converters 11 of the auxiliary driving system 10 can be arranged to solutions of know type, which are here not described in further detail for the sake of brevity.

The power distribution line 200 may operate at low voltages (for example lower than 1.0 kV) or medium voltages (for example AC voltages between 1.0 kV and 72 kV).

The port 112 of each electric power converter 11 of the driving system can be electrically connected to the electric power distribution line 200 according to solutions of known type, which are here not described in further detail for the sake of brevity.

The auxiliary driving system 10 of the invention comprises an auxiliary control unit 12 operatively coupled to each electric power converter 11 of the driving system.

In operation, the auxiliary control unit 12 can communicate with the main control unit 4 of the hydroelectric power generation apparatus. To this aim, the auxiliary control unit 12 can be operatively coupled to the main control unit 4 through a suitable LAN or equivalent communication line.

In general, the auxiliary control unit 12 is configured to carry out control functionalities and monitoring functionalities of the driving system 10 and, possibly, also of the the hydroelectric power generation apparatus.

In order to carry out its functionalities, the auxiliary control unit 12 can include suitable computerized data processing resources (e.g., including microprocessors, memories, and the like), which can be arranged according to the needs.

According to the invention, the auxiliary control unit 12 is configured to carry out a control procedure 100 to adjust the rotational speed of the rotor shaft 32 of each electric power generator 3 depending on an available water flow directed towards a corresponding hydro turbine 2 operatively coupled to said electric power generator. As mentioned above, the water flow comes from a water chamber feeding the turbine chamber.

The auxiliary control unit 12 is configured to adjust the rotational speed of the rotor shaft 32 of each electric power generator 3 in such a way to maximize the production of electric power for an available water flow directed towards a corresponding hydro turbine.

As the rotational speed of the rotor shaft 32 of each electric power generator 3 is proportional to the rotational speed of the hydro turbine 2 coupled to the electric power generator, the auxiliary control unit 12 allows each hydro turbine 2 to operate always at an optimal rotational speed, which allows maximizing the production of electric power apparatus for any at any water flow regime. The electric power production of each hydro turbine 2 can thus achieve optimal levels over an extended range of water flow regimes (for example, from 5% to 95% depending on the intrinsic turbine efficiency). Obviously, this allows maximizing the overall efficiency of the hydroelectric power generation apparatus operatively coupled to the auxiliary driving system.

Preferably, the auxiliary control unit 12 is configured to carry out the control procedure 100 iteratively, for example with repetition cycle of 60 s. The rotational speed of the rotor shaft 32 of each electric power generator 3 can thus be continuously adjusted in such a way to maintain the production of electric power at optimal levels notwithstanding possible variations of the available water flow directed towards the corresponding hydro turbine 2.

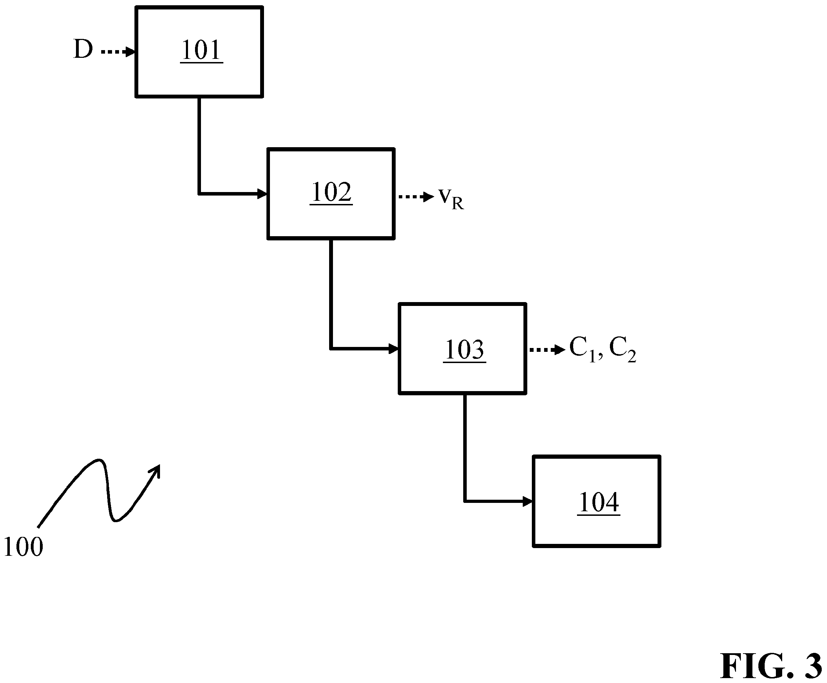

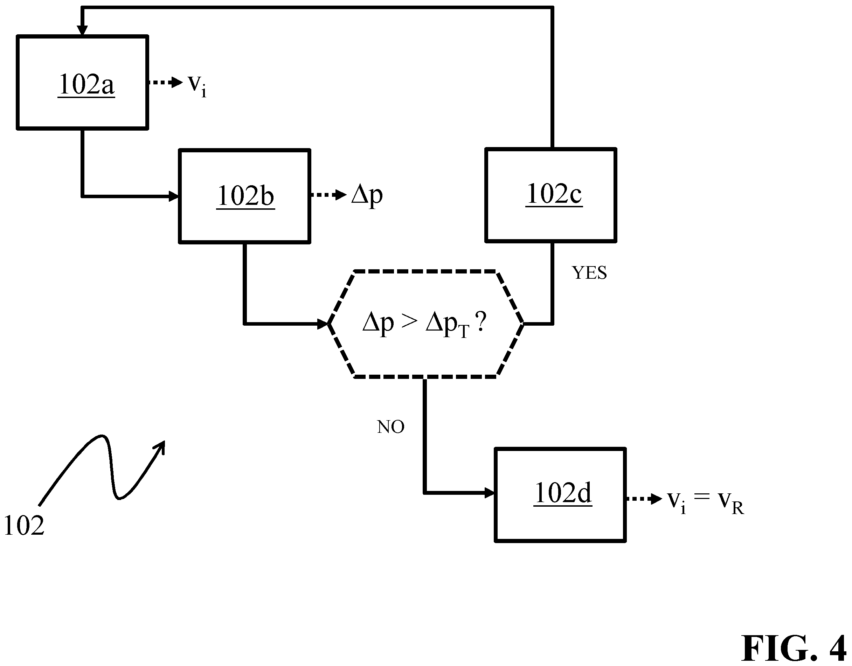

The control procedure 100 is now described in more detail with reference to figures 3-4.

The control procedure 100 comprises a step 101 of acquiring monitoring data D related to the operating conditions of each hydro turbine 2.

The monitoring data D may include detection data related to the water pressure, temperature, rotational speed, and other relevant operating parameters of each hydro turbine 2.

Preferably, the main control unit 4 of the hydroelectric power generation apparatus can collect the monitoring data D as described above. The auxiliary control unit 12 can thus acquire the monitoring data D through the main control unit 4.

As an example, the main control unit 4 can regularly transmit the monitoring data D at each repetition cycle of the control procedure 100 or transmit the monitoring data D in response to receiving a request message from the auxiliary control unit 12.

The control procedure 100 comprises a step 102 of calculating a reference speed value v_{R} for the rotational speed of the rotor shaft 32 of each electric power generator 3 based on the monitoring data D.

Preferably, the calculated reference speed value v_{R} is the rotational speed value of the rotor shaft 32, at which the production of electric power reaches a maximum value for an available water flow directed towards the hydro turbine 2.

Preferably, the reference speed value v_{R} is calculated through an iterative calculation procedure 102.

Preferably, the calculation procedure 102 includes a step 102a calculating a rotational speed value vᵢ of the rotor shaft 32 of the electric power generator 3 based on the acquired monitoring data D.

Preferably, the calculation procedure 102 includes a step 102b of calculating a variation value Δp of the electric power generated by the hydroelectric power generation apparatus in response to the calculated speed value vᵢ.

If the calculated variation value Δp of generated electric power is higher than or equal to a predefined threshold Δp_{T}, it means that the calculated rotational speed value v; is still not optimal for the available water flow directed towards the hydro turbine 2. The calculation procedure 102 thus provides for repeating (step 102c) the previous steps.

If the calculated variation value Δp of generated electric power is lower than the predefined threshold Δp_{T}, it means that the calculated rotational speed value v; is optimal for the available water flow directed towards the hydro turbine 2.

The calculation procedure 102 thus provides for setting (102d) the calculated speed value v; as the above-mentioned reference speed value v_{R}, at which the production of electric power reaches a maximum value for an available water flow directed towards the hydro turbine 2. The control procedure 100 comprises a step 103 of calculating first control parameters C₁ for the electric power generator 3 and second control parameters C₂ for the electric power converter 101 to adjust the rotational speed of the rotor shaft 32 of each electric power generator 3 in such a way to follow the calculated reference value v_{R}.

The rotational speed of the rotor shaft 32 of the electric power generator 3 can be adjusted through control methods of known type. As an example, the rotational speed of the rotor may be adjusted at a given adjustment instant t_{B} by observing the differential variation of generated electric power compared to the electric power generated at a previous adjustment instant t_{A} and varying the rotational speed in such a way to maintain maximum or nearly-maximum energy production levels.

The auxiliary control unit 12 calculates the first and second control parameters C₁, C₂ to implement the above-mentioned control methods of the rotational speed of the rotor shaft 32 of each electric power generator 3.

The control procedure 100 comprises a step 104 of providing the first control parameters C₁ to each electric power generator 3 and the second control parameters C₂ to each electric power converter 11. Advantageously, the auxiliary control unit 12 can provide the first control parameters C₁ to each electric power generator 3 through the main control unit 4.

According to preferred embodiments of the invention, the auxiliary driving system 10 comprises an HMI unit 13 to allow an operator to interact with the auxiliary control unit 12 at local level.

Preferably, the HMI unit 13 is a computerised device providing a graphic user interface on a computer display.

The graphic user interface is a visual graphic environment comprising visual graphic resources (e.g. graphic icons, graphic windows, graphic cursors, visual indicators, visual menus, and the like) to assist a user in interacting with the auxiliary control unit 12.

These graphic resources are made available to assist a user providing in input to the auxiliary control unit 12 specific commands to execute corresponding actions or configuration information.

These graphic resources are activatable through known activation modes adopted in computerised devices, e.g. by clicking on said graphic resources through a mouse pointer (e.g. when the display is a computer monitor or a lap-top display) or by touching corresponding interactive regions of the display 52 (e.g. when the display is a touch-screen display). Commands or configuration information can be provided in input to the auxiliary control unit 12 by a user in accordance to known input modes adopted in computerised devices, e.g. by typing or activating dedicated graphic objects (graphic cursors, graphic icons, and the like). Preferably, the above-mentioned graphic user interface comprises one or more graphic pages, at which the above-mentioned graphic resources are made available and auxiliary graphic resources (e.g. graphic buttons) to allow a user to navigate through different graphic pages. According to preferred embodiments of the invention, the auxiliary driving system 10 has Internet communication capabilities. To this aim, the auxiliary driving system 10 advantageously includes a communication unit 14 (for example a router) configured to allow a remote computerized system 300 to communicate with one or more operating units 11, 12, 13 of the driving system 10, for example the one or more electric power converters 11, the auxiliary control unit 12 and the HMI unit 13.

Preferably, the communication unit 14 is configured to execute suitable communication protocols to implement suitable VPNs or other suitable safe communication means to put in communication the remote computerized systems 300 and the operating units of the driving system 10.

The auxiliary driving system 10 of the present invention, provides relevant technical advantages.

The auxiliary driving system 10 allows adjusting the rotational speed of the rotor shaft 32 of each electric power generator 3 according to the available water flow directed towards the corresponding hydro turbine 2.

Each hydro turbine 2 can thus always operate at an optimal rotational speed for any available water flow regime, which allows optimizing the production of electric power apparatus over an extended range of water flow values.

The auxiliary driving system 10 therefore improves the overall efficiency of the hydroelectric power generation apparatus, to which it is operatively coupled.

The auxiliary driving system 10 can be easily installed and operated and it can be easily integrated in new or existing hydroelectric power generation apparatuses.

The auxiliary driving system 10 is thus particularly adapted to be used also for retrofitting purposes directed to improve the overall efficiency of an existing hydroelectric power generation plant.

The auxiliary driving system 10 is of relatively easy industrial production, at competitive costs with respect to traditional hydroelectric power generation systems.

## Claims

1. An auxiliary driving system (10) for a hydroelectric power generation apparatus (1), wherein said hydroelectric power generation apparatus comprises:
- one or more hydro turbines (2) having a rotary turbine shaft (21);
- one or more electric power generators (3), each having a rotor shaft (32) mechanically coupled to and rotatably actuated by the turbine shaft (21) of a corresponding hydro turbine, a rotor winding (31) rotating together said rotor shaft and a stator winding (33) operatively coupled to said rotor winding;
- a main control unit (4) to control the operation of said hydroelectric power generation apparatus;
**characterized in that** said auxiliary driving system (10) comprises:
- one or more electric power converters (11), each electric power converter being in operation electrically connected to a corresponding electric power generator (3) and to a corresponding electric power distribution line (200);
- an auxiliary control unit (12) operatively coupled to each electric power converter (11), said auxiliary control unit being in operation capable of communicating with said main control unit (4);
wherein said auxiliary control unit (12) is configured to carry out a control procedure to adjust the rotational speed of the rotor shaft (32) of each electric power generator (3) depending on an available water flow directed towards a corresponding hydro turbine (2) operatively coupled to said electric power generator.

2. An auxiliary driving system, according to claim 1, **characterized in that** said auxiliary control unit (12) is configured to carry out a control procedure (100) including the following steps:
- acquiring (101) monitoring data (D) related to the operating conditions of said hydro turbine (2);
- based on said monitoring data (D), calculating (102) a reference speed value (v_{R}) for the rotational speed of the rotor shaft (32) of said electric power generator (3);
- calculating (103) first control parameters (C₁) for said electric power generator (3) and second control parameters (C₂) for said electric power converter (101) to adjust the rotational speed of the rotor shaft (32) of said electric power generator (3) in such a way to follow the calculated reference value (v_{R});
- sending (104) said first control parameters (C₁) to said electric power generator (3) and said second control parameters (C₂) to said electric power converter (11).

3. An auxiliary driving system, according to claim 2, **characterized in that** said auxiliary control unit (12) acquires said monitoring data (D) through said main control unit (4).

4. An auxiliary driving system, according to one of the claims from 2 to 3, **characterized in that** said auxiliary control unit (12) sends said first control parameters (C₁) to said electric power generator (3) through said main control unit (4).

5. An auxiliary driving system, according to one of the claims from 2 to 4, **characterized in that** said reference speed value (v_{R}) is the rotational speed value of the rotor shaft (32) of said electric power generator (3), at which the production of electric power reaches a maximum value for an available water flow directed towards said hydro turbine (2).

6. An auxiliary driving system, according to claim 5, **characterized in that** said auxiliary control unit (12) calculates said reference speed value (v_{R}) through an iterative calculation procedure (102) including the following steps;
- calculating (102a) a rotational speed value (vᵢ) of the rotor shaft (32) of said electric power generator (3) based on the acquired monitoring data D;
- calculating (102b) a variation value (Δp) of the electric power generated by said hydroelectric power generation apparatus based on the calculated speed value (vᵢ);
- repeating (102c) the previous steps, if said variation value (Δp) is higher than a predefined threshold (Δp_{T});
- setting (102d) the calculated speed value (vᵢ) as said reference speed value (v_{R}), if said variation value (Δp) is lower than a predefined threshold (Δp_{T}).

7. An auxiliary driving system, according to one of the previous claims, **characterized in that** said auxiliary control unit (12) is configured to carry out said control procedure (100) iteratively.

8. An auxiliary driving system, according to one of the previous claims, **characterized in that** it comprises an HMI unit (13) to allow an operator to interact with said auxiliary control unit (12) at local level.

9. An auxiliary driving system, according to one of the previous claims, **characterized in that** it comprises a communication unit (14) to allow a remote computerized system (300) to communicate with one or more units (11, 12, 13) of said driving system (10).

10. An auxiliary driving system, according to one of the previous claims, **characterized in that** said electric power converter (11) is an AC/AC converter of the active front end type.

11. A hydroelectric power generation plant **characterized in that** it comprises at least a hydroelectric power generation apparatus (1) and an auxiliary driving system (10), according to one of the previous claims, operatively coupled to said hydroelectric power generation apparatus.

12. A hydroelectric power generation plant, according to claim 11, **characterized in that** it is of the water fluent type.

13. A hydroelectric power generation plant, according to claim 11 or 12, **characterized in that** it has a nominal power lower than 10000 KW.
